# EUROPEAN PATENT SPECIFICATION

(11) **EP 1 961 597 B1**
(45) Date of publication and mention of the grant of the patent: **27.04.2011**
(21) Application number: 08290177.8
(22) Date of filing: 26.02.2008
(51) Int. Cl.: B60H 1/00

(54) **Air-conditioning system for vehicles**
Klimaanlagensystem für Fahrzeuge
Système de climatisation pour véhicules

(30) Priority: 26.02.2007 KR 20070018874; 04.02.2008 KR 20080011008
(43) Date of publication of application: 27.08.2008
(73) Proprietor: Halla Climate Control Corporation, Daejeon-si 306-230 (KR)
(72) Inventor: Baek, Youngkee, Daejeon-si 306-230 (KR)
(74) Representative: Hirsch & Associés

(56) References cited:
- EP-A- 1 271 026
- WO-A-2006/073043
- DE-A1- 19 731 248
- DE-U1- 29 724 231

## Description

### BACKGROUND OF THE INVENTION

### Field of the Invention

The present invention relates to an air-conditioning system for vehicles, and more particularly, to an air-conditioning system for vehicles, in which expansion means and an internal heat exchanger are formed integrally with each other or expansion means, an internal heat exchanger and an accumulator are formed integrally with one another in an air-conditioning system using carbon dioxide (CO₂) as refrigerant so as to minimize and simplify a refrigerant line, thereby reducing the cost and a loss of energy according to a reduction in the number of assembly processes thereof.

### Background Art

In general, it has been widely known that CFC refrigerant called Freon gas destructs the ozone layer, and the CFC refrigerant rises as an environmental problem all over the world. Thus, in advanced countries, new alternative refrigerants, which can minimize the environmental problem, have been developed and applied to home appliances.

Among the alternative refrigerants, Carbon dioxide (CO₂) is has a merit in that it is easy in manufacturing a compact-sized air-conditioning system since it is a very stable, odorless, nontoxic, noncorrosive, unburned and nonexplosive material, compatible with lubricating oil, and is smaller in specific volume of gas than other refrigerants.

In addition, the greatest property of CO₂ is its high vapor pressure and low critical temperature.

Owing to the high vapor pressure and low critical temperature, a CO₂ refrigerant system has a supercritical cycle that absorbs heat at lower pressure than the critical pressure but emits heat at higher pressure (supercritical state) than the critical pressure. The CO₂ refrigerant system includes a compressor, a gas cooler, an internal heat exchanger, an expansion valve, an evaporator, and so on.

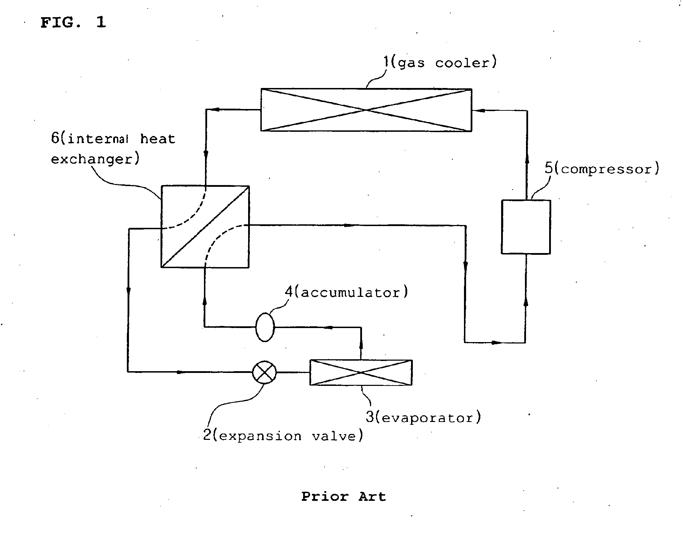

FIG. 1 is a configurative diagram of a CO₂ air-conditioning system having the above structure. In the CO₂ air-conditioning system, refrigerant is sequentially circulated in order of a compressor 5, a gas cooler 1, an internal heat exchanger 6, an expansion valve 2, an evaporator 3, an accumulator 4, the internal heat exchanger 6, and the compressor 5. Here, the accumulator 4 serves to remove liquid refrigerant contained in vapor refrigerant discharged from the evaporator 3 and supply only vapor refrigerant to the compressor 5.

Since efficiency of the supercritical refrigerant system is influenced by a control of an area of the gas cooler 1, it is necessary to control a refrigerant flow during throttling by detecting temperature and pressure of refrigerant of an outlet of the gas cooler 1. That is, the expansion valve 2 controls the refrigerant flow during throttling by detecting the temperature and pressure of the refrigerant of the outlet of the gas cooler 1 to keep proper temperature and pressure for the optimum efficiency of the system. Furthermore, in order to provide the optimum coefficient of performance, since the refrigerant temperature of the outlet of the gas cooler 1 must be lowest, the internal heat exchanger 6 is essentially needed to mutually heat-exchange the refrigerant of the outlet of the gas cooler 1 with refrigerant of an outlet of the evaporator 3.

The internal heat exchanger 6 heat-exchanges high-pressure refrigerant of the outlet of the gas cooler 1 with low-temperature and low-pressure refrigerant of the outlet of the evaporator 3 to thereby reduce enthalpy of refrigerant introduced into the expansion valve 2, whereby performance of the air-conditioning system can be maximized by increasing a difference in enthalpy between refrigerant of an inlet and refrigerant of the outlet of the evaporator 3 after a throttling process including an isenthalpic process. The low-temperature and low-pressure refrigerant is heated after passing through the accumulator 4 to raise the degree of superheat of an inlet of the compressor 5 and introduce liquid refrigerant to the inlet of the compressor 5, whereby a trouble of the compressor 5 can be prevented.

Document WO-A-2006/073043 illustrates an air-conditioning system for vehicles with a refrigerant line. The refrigerant line includes a compressor, a gas cooler, an expansion valve, an internal heat exchanger and an accumulator. The refrigerant line further includes an internal exchanger. The control valve is mounted on a block that arranges, with another block, tubes 71 and 72, parts of the internal heat exchanger, concentrically. The heat exchanger heat-exchanges between refrigerant flowing from the gas cooler to the control valve and refrigerant flowing from the accumulator to the compressor.

However, the conventional air-conditioning system for vehicles has a problem in that its manufacturing cost rises and a loss of energy is increased due to an extended and complicated refrigerant line since the expansion valve 2, the internal heat exchanger 6 and the accumulator 4 are separately connectively mounted on the refrigerant line.

### SUMMARY OF THE INVENTION

Accordingly, the present invention has been made to solve the above-mentioned problems occurring in the prior arts, and it is an object of the present invention to provide an air-conditioning system for vehicles, in which expansion means and an internal heat exchanger are formed integrally with each other or expansion means, an internal heat exchanger and an accumulator are formed integrally with one another in an air-conditioning system using carbon dioxide (CO₂) as refrigerant so as to minimize and simplify a refrigerant line, thereby reducing the cost and a loss of energy according to a reduction in the number of assembly processes thereof.

To accomplish the above object, according to the present invention, there is provided an air-conditioning system for vehicles, which comprises a compressor, a gas cooler, expansion means, and an evaporator as a refrigerant line for circulating refrigerant in this order, wherein the expansion means includes: an expansion block having a first high-pressure flow passage connected with an outlet line of the gas cooler and a second high-pressure flow passage connected with an inlet line of the evaporator; and an expansion valve mounted inside the expansion block and adapted to control the opening and closing degree of the second high-pressure flow passage according to temperature or pressure of refrigerant flowing in the first high-pressure flow passage, the air-conditioning system comprising an internal heat exchanger integrally mounted on a side of the expansion block and adapted to heat-exchange high-pressure refrigerant flowing from the first high-pressure flow passage to the second high-pressure flow passage with low-pressure refrigerant flowing from the evaporator to the compressor.

### BRIEF DESCRIPTION OF THE DRAWINGS

The above and other objects, features and advantages of the present invention will be apparent from the following detailed description of the preferred embodiments of the invention in conjunction with the accompanying drawings, in which:

FIG. 1 is a configurative diagram of a general air-conditioning system for carbon dioxide;

FIG. 2 is a configurative diagram of an air-conditioning system for vehicles according to a first preferred embodiment of the present invention;

FIG. 3 is a perspective view showing a state where expansion means and an internal heat exchanger are integrally formed in the air-conditioning system according to the first preferred embodiment of the present invention;

FIG. 4 is a sectional view taken along the line of A-A in FIG. 3;

FIG. 5 is a configurative diagram of an air-conditioning system for vehicles according to a second preferred embodiment of the present invention;

FIG. 6 is a perspective view showing a state where expansion means, an internal heat exchanger and an accumulator are integrally formed in the air-conditioning system according to the second preferred embodiment of the present invention; and

FIG. 7 is a sectional view showing the state where the expansion means, the internal heat exchanger and the accumulator are integrally formed in the air-conditioning system according to the second preferred embodiment of the present invention.

### DETAILED DESCRIPTION OF THE PREFERRED EMBODIMENT

Reference will be now made in detail to the preferred embodiment of the present invention with reference to the attached drawings.

In the present invention, description of the same configuration and action as the prior arts will be omitted.

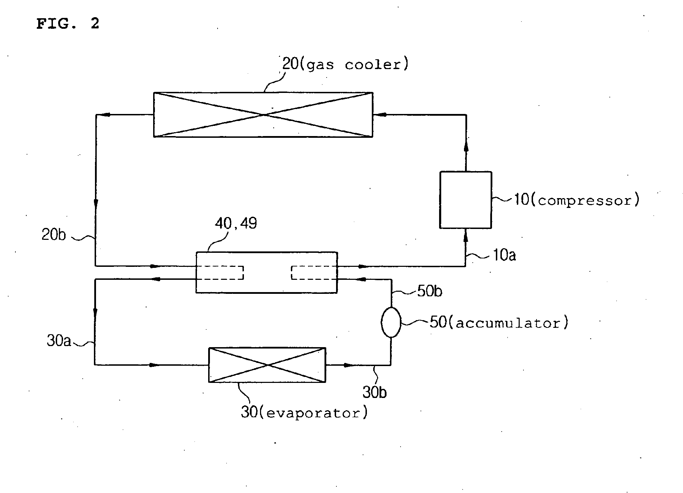

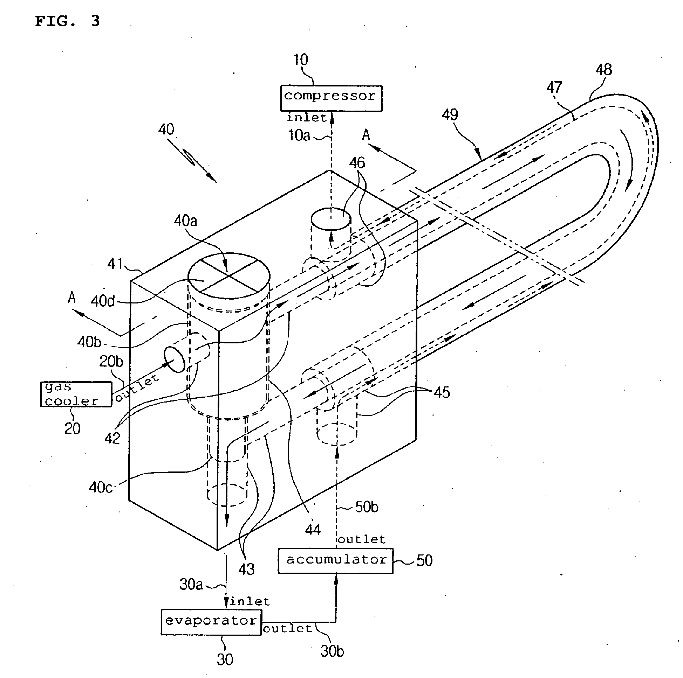

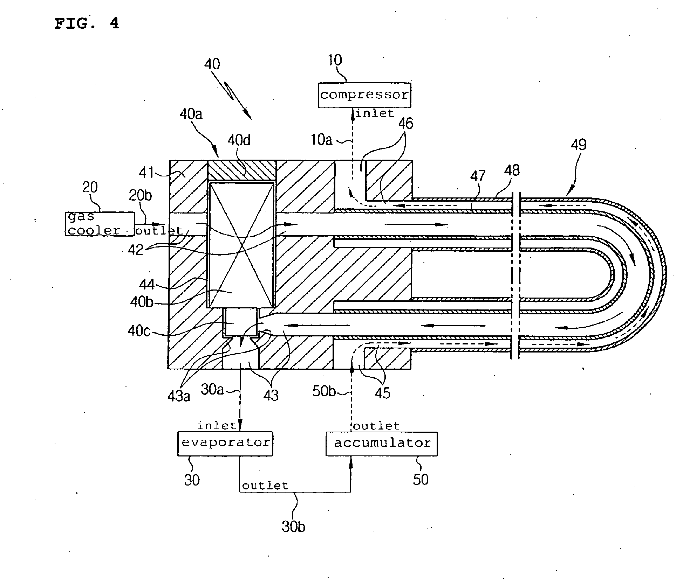

FIG. 2 is a configurative diagram of an air-conditioning system for vehicles according to a first preferred embodiment of the present invention, FIG. 3 is a perspective view showing a state where expansion means and an internal heat exchanger are integrally formed in the air-conditioning system according to the first preferred embodiment of the present invention, and FIG. 4 is a sectional view taken along the line of A-A in FIG. 3.

As shown in the drawings, the air-conditioning system for vehicle according to the first preferred embodiment of the present invention uses carbon dioxide (CO₂) as refrigerant, and includes a compressor 10, a gas cooler 20, the expansion means 40/internal heat exchanger 49, an evaporator 30, and an accumulator 50 connected to a refrigerant line.

That is, refrigerant is circulated in order of the compressor 10, the gas cooler 20, the expansion means 40/internal heat exchanger 49, the evaporator 30, the accumulator 50, the expansion means 40/internal heat exchanger 49, and the compressor 10.

Here, the accumulator 50 is mounted between an outlet of the evaporator 30 and the internal heat exchanger 49, but may be omitted since it is selectively mounted.

In the air-conditioning system according to the present invention, the expansion means 40 and the internal heat exchanger 49 are formed integrally with each other, and so, the expansion means 40 will be described in detail.

The expansion means 40 includes an expansion block 41 and an expansion valve 40a.

The expansion block 41 has uniform thickness and form, and includes a first high-pressure flow passage 52 connected with an outlet line 20b of the gas cooler 20 and passing through both ends thereof, and a second high-pressure flow passage 43 spaced apart from the first high-pressure flow passage 42 at a predetermined interval and connected with an inlet line of the evaporator 30a.

Here, the second high-pressure flow passage 43 is in an "L"-shaped form.

Moreover, an insertion hole 44 is formed inside the expansion block 41 for communicating the first high-pressure flow passage 42 with the second high-pressure flow passage 43 in such a way that the expansion valve 40a can be inserted and mounted between the first and second high-pressure flow passages 42 and 43, and the expansion valve 40a is inserted and mounted in the insertion hole 44.

The insertion hole 44 is formed at right angles to the first high-pressure flow passage 42 at a side thereof and penetrates from the side of the expansion block 41 to the second high-pressure flow passage 43 after passing through the first high-pressure flow passage 43 to thereby communicate the first and second high-pressure flow passages 42 and 43 with each other. Additionally, a sealing cap 40d is mounted on the insertion hole 44 in such a way as to seal an entrance of the insertion hole 44 after the expansion valve 40a is inserted and mounted therein, whereby a leakage of refrigerant from the expansion block 41 can be prevented.

Furthermore, the expansion valve 40a is mounted in the insertion hole 44 of the expansion block 41, and controls the opening and closing degree of the second high-pressure flow passage 43 according to temperature or pressure of refrigerant flowing in the first high-pressure flow passage 42.

The expansion valve 40a includes a temperature-sensing part 40b adapted to perform contraction and expansion by sensing the temperature and pressure of the refrigerant flowing in the first high-pressure flow passage 42, and a valve part 40c adapted to control the opening and closing degree of the second high-pressure flow passage 43 to adjust an amount of refrigerant supplied to the evaporator 30 according to the contraction or expansion of the temperature-sensing part 40b.

In this instance, the temperature-sensing part 40b is mounted on the first high-pressure flow passage 42 of the expansion block 41, and the valve part 40c adjusts the amount of refrigerant passing through the second high-pressure flow passage 43 while vertically moving in interlock with the temperature-sensing part 40b when the temperature-sensing part 40b performs the contraction or expansion.

In addition, the second high-pressure flow passage 43 has flow passage reducing portions 43a formed at upstream and downstream portions of the valve part 40c for reducing a diameter of the flow passage, so that a throttling action can be performed smoothly during a process that the refrigerant passing through the second high-pressure flow passage 43 passes through the flow passage reducing portions 43a.

In this instance, the flow passage reducing portions 43a is formed adjacent to the valve part 40c.

As described above, the expansion valve 40a controls the opening and closing degree of the second high-pressure flow passage 43 according to the temperature or pressure of the refrigerant of the outlet of the gas cooler 20, which flows through the first high-pressure flow passage 42, to thereby adjust the flow amount of the refrigerant, whereby the system can keep a proper temperature or pressure to achieve the optimum efficiency.

Furthermore, the internal heat exchanger 49 is integrally mounted on a side of the expansion block 41, and heat-exchanges the high-pressure refrigerant flowing from the first high-pressure flow passage 42 to the second high-pressure flow passage 43 with the low-pressure refrigerant flowing from the evaporator 30 to the compressor 10.

Here, in case where the accumulator 50 is mounted between the evaporator 30 and the internal heat exchanger 49, the internal heat exchanger 49 heat-exchanges the high-pressure refrigerant flowing from the first high-pressure flow passage 42 to the second high-pressure flow passage 43 with the low-pressure refrigerant flowing from the accumulator 50 to the compressor 10.

Moreover, in order to mount the internal heat exchanger 49, the expansion block 41 includes a first low-pressure flow passage 45 connected with an outlet line 30b of the evaporator 30 or an outlet line 50b of the accumulator 50 (in case where the accumulator is mounted) and a second low-pressure flow passage 46 connected with an inlet line 10a of the compressor 10.

In this instance, it is preferable that the second high-pressure flow passage 43 and the first low-pressure flow passage 45 are formed adjacent to a side of the expansion block 41. That is, when the second high-pressure flow passage 43 and the first low-pressure flow passage 45 are formed adjacent to the side of the expansion block 41, the side of the expansion block 41 can be directly mounted on inlet and outlet of the evaporator 30 and flow directions of the low-pressure refrigerant and the high-pressure refrigerant are opposed to each other in the internal heat exchanger 49 to thereby enhance a heat-exchanging performance.

The internal heat exchanger 49 includes: a low-pressure pipe 48 of a predetermined length mounted on a side of the expansion block 41 and adapted to communicatingly connect an outlet of the first low-pressure flow passage 45 and an inlet of the second low-pressure flow passage 46 with each other; and a high-pressure pipe 47 of a predetermined length mounted on the side of the expansion block 41 and adapted to communicatingly connect an outlet of the first high-pressure flow passage 42 and an inlet of the second high-pressure flow passage 43 with each other.

That is, the internal heat exchanger 49 has a double pipe structure that the high-pressure pipe 47 is located inwardly and the low-pressure pipe 48 is located outwardly. In this instance, an end portion of the high-pressure pipe 47 is inserted into the first low-pressure flow passage 45 and connected with the outlet of the first high-pressure flow passage 42, and the other end portion is inserted into the second low-pressure flow passage 46 and connected with the inlet of the second high-pressure flow passage 43.

In the meantime, the first and second low-pressure flow passages 45 and 46 penetrating the expansion block 41 is not communicated with the first and second high-pressure flow passages 42 and 43, but communicated only with the low-pressure pipe 48.

In addition, the high-pressure pipe 47 and the low-pressure pipe 48 of the internal heat exchanger 49 can be bonded integrally with the expansion block 41 via welding, or coupled to the expansion block 41 through a separate sealing structure using an O-ring.

Accordingly, the high-temperature and high-pressure refrigerant discharged from the gas cooler 20 and flowing in the high-pressure pipe 47 through the first high-pressure flow passage 42 heat-exchanges with the low-temperature and low-pressure refrigerant discharged from the evaporator 30 or the accumulator 50 (in case where the accumulator 50 is mounted) and flowing in the low-pressure pipe 48 through the first low-pressure flow passage 45, whereby temperature of the high-temperature and high-pressure refrigerant before throttling lowers and the degree of superheat of the refrigerant introduced into the compressor 10 rises.

Additionally, the refrigerant heat-exchanged while flowing in the high-pressure pipe 47 is throttled while passing through the second high-pressure flow passage 43, and then, introduced into the evaporator 30. In this instance, the refrigerant heat-exchanged while flowing in the low-pressure pipe 48 passes through the second low-pressure flow passage 46, and then, is introduced into the compressor 10.

Hereinafter, a refrigerant circulation process of the air-conditioning system according to the first preferred embodiment will be described as follows.

First, when the high-temperature and high-pressure liquid refrigerant discharged from the compressor 10 is introduced into the gas cooler 20, the gas cooler 20 heat-exchanges the introduced liquid refrigerant with the outside air.

Continuously, the refrigerant passing through the gas cooler 20 is introduced into the first high-pressure flow passage 42 of the expansion block 41 through the outlet line 20b of the gas cooler 20, and then, introduced into the second high-pressure flow passage 43 through the high-pressure pipe 47 of the internal heat exchanger 49.

The refrigerant introduced into the second high-pressure flow passage 43 is quickly expanded by the throttling action of the expansion valve 40a and changed into a wet saturated state of low-temperature and low-pressure, and then, introduced into the evaporator 30 through the inlet line 30a of the evaporator 30.

Thereafter, the evaporator 30 heat-exchanges the introduced refrigerant with air blown to the inside of the vehicle by a blower (not shown). In this instance, the refrigerant is evaporated in the evaporator 30 to thereby be converted into low-temperature and low-pressure refrigerant, and then, discharged to the outside.

After the liquid refrigerant is removed from the low-temperature and low-pressure refrigerant while the low-temperature and low-pressure refrigerant discharged from the evaporator 30 passes through the accumulator 50 along the outlet line 30b of the evaporator 30, the refrigerant is introduced into the first low-pressure flow passage 45 of the expansion block 41 through the outlet line 50b of the accumulator 50.

Thereafter, the refrigerant introduced into the first low-pressure flow passage 45 of the expansion block 41 is introduced into the second low-pressure flow passage 46 through the low-pressure pipe 48 of the internal heat exchanger 49.

In the above process, the high-temperature and high-pressure refrigerant passing through the high-pressure pipe 47 of the internal heat exchanger 49 heat-exchanges with the low-temperature and low-pressure refrigerant passing through the low-pressure pipe 48 of the internal heat exchanger 49, whereby temperature of the high-temperature and high-pressure refrigerant flowing from the gas cooler 20 to the expansion valve 40a (valve part of the expansion valve) lowers and the degree of superheat of the low-temperature and low-pressure refrigerant introduced into the compressor 10 is kept properly.

In succession, the refrigerant discharged through the second low-pressure flow passage 46 is sucked to the compressor 10 through the inlet line 10a of the compressor 10, and recirculated in the same refrigerant cycle as the above.

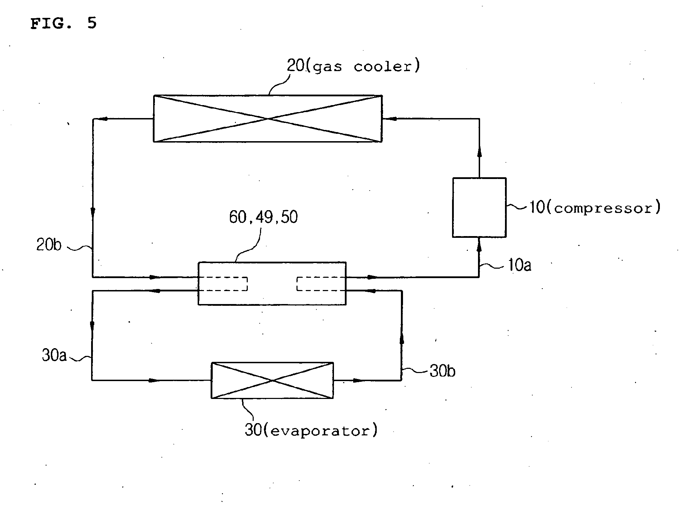

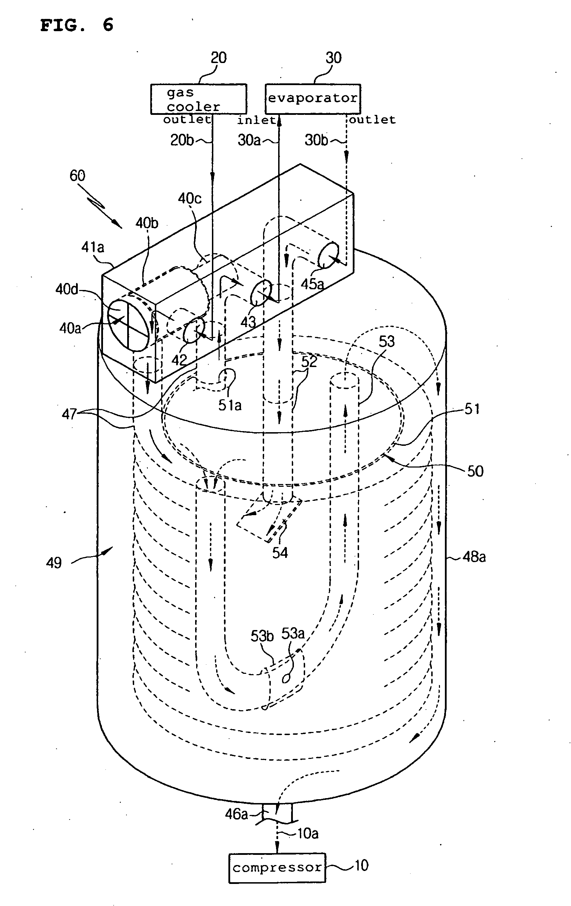

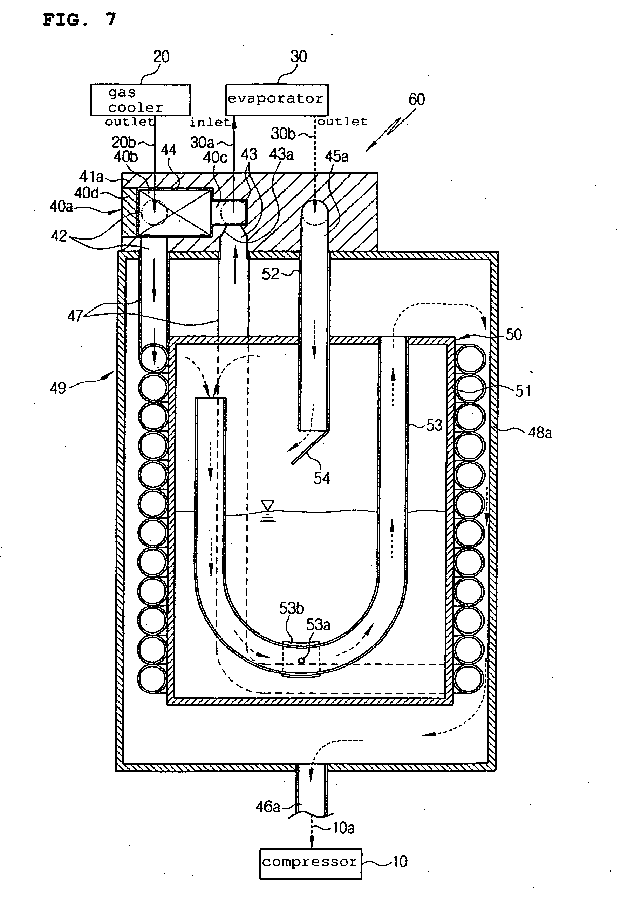

FIG. 5 is a configurative diagram of an air-conditioning system for vehicles according to a second preferred embodiment of the present invention, FIG. 6 is a perspective view showing a state where expansion means, an internal heat exchanger and an accumulator are integrally formed in the air-conditioning system according to the second preferred embodiment of the present invention, and FIG. 7 is a sectional view showing the state where the expansion means, the internal heat exchanger and the accumulator are integrally formed in the air-conditioning system according to the second preferred embodiment of the present invention. In the second preferred embodiment of the present invention, only different parts from the first preferred embodiment will be described, and repeated description will be omitted.

As shown in the drawings, in the air-conditioning system for vehicles according to the second preferred embodiment, the expansion means 60, the internal heat exchanger 49 and the accumulator 50 are all integrally formed. That is, in the second preferred embodiment, the internal heat exchanger 49 is disposed integrally with a side of the expansion means 60 including an expansion valve 40a and an expansion block 41a, and the accumulator 50 is mounted in the internal heat exchanger 49.

So, refrigerant in the air-conditioning system according to the second preferred embodiment is circulated in order of a compressor 10, a gas cooler 20, the expansion means 60/ internal heat exchanger 49/ accumulator 50, an evaporator 30, the expansion means 40 / internal heat exchanger 49/ accumulator 50, and the compressor 10.

First, the expansion block 41a has the same structure as the expansion block 41 of the first preferred embodiment within a range to first and second high-pressure flow passages 42 and 43 and an insertion hole 44. However, in the second preferred embodiment, since the accumulator 50 is mounted in the internal heat exchanger 49, a first low-pressure flow passage 45a formed in the expansion block 41a serves as a passageway to connect an outlet line 30b of the evaporator 30 with the accumulator 50, and the expansion block 41a in the second preferred embodiment does not have the second low-pressure flow passage 46, which is formed on the expansion block 41 and connected with the inlet line 10a of the compressor 10 in the first preferred embodiment.

Of course, a second low-pressure flow passage 46a is formed on an outlet of a low-pressure tank 48a, which will be described later, and connected with the inlet line 10a of the compressor 10.

That is, the first and second low-pressure flow passages 45a and 46a correspond with the first and second low-pressure flow passages 45 and 46 of the first preferred embodiment, and the low-pressure tank 48a of the internal heat exchanger 49 of the second preferred embodiment corresponds with the low-pressure pipe 48 of the internal heat exchanger 49 of the first preferred embodiment.

Furthermore, the internal heat exchanger 49 includes: the low-pressure tank 48a integrally formed on a side of the expansion block 41a in such a way that the accumulator 50 connected with the outlet line 30b of the evaporator 30 through the first low-pressure flow passage 45a formed in the expansion block 41a is mounted therein, the low-pressure tank 48a having the second low-pressure flow passage 46a formed on an outlet thereof in such a way that the refrigerant discharged from the accumulator 50 flows to the inlet line 10a of the compressor 10; and a high-pressure pipe 47 adapted to connect an outlet of the first high-pressure flow passage 42 with an inlet of the second high-pressure flow passage 43 and wound on the outer peripheral surface of the accumulator 50 within the low-pressure tank 48a, so that the internal heat exchanger 49 heat-exchanges low-pressure refrigerant flowing in the low-pressure tank 48a and high-pressure refrigerant flowing in the high-pressure pipe 47 with each other.

That is, as you can see through the structure of the internal heat exchanger 49 according to the second preferred embodiment, the low-pressure tank 48a, which connects the first and second low-pressure flow passages 45a and 46a with each other, surrounds the high-pressure pipe 47, which connects the first and second high-pressure flow passages 42 and 43 with each other, whereby the refrigerant flowing in the high-pressure pipe 47 is heat-exchanged with the refrigerant flowing in the low-pressure tank 48a. Such a structure can be obtained by applying the structure of the internal heat exchanger 49 of the first preferred embodiment as it is.

In the meantime, the high-pressure pipe 47 is wound on the accumulator 50 ranging from the top to the bottom of the accumulator 50, and then, connected with the inlet of the second-high-pressure flow passage 43 through a receiving hole 51a vertically formed in a vapor-liquid separation tank 51 of the accumulator 50.

Moreover, the accumulator 50 includes: the vapor-liquid separation tank 51 having an empty inside; an inflow pipe 52 adapted to communicate the first low-pressure flow passage 45a formed in the expansion block 41a with the inside upper portion of the vapor-liquid separation tank 51 to thereby introduce the low-pressure refrigerant discharged from the evaporator 30 into the vapor-liquid separation tank 51; a vapor-liquid separation plate 54 integrally formed on the lower end of the inflow pipe 52 for separating the liquid refrigerant and the vapor refrigerant by scattering the low-pressure refrigerant introduced through the inflow pipe 52; and an outflow pipe 53 adapted to communicate the inside upper portion of the vapor-liquid separation tank 51 with the inside of the low-pressure tank 48a for discharging the vapor refrigerant of the vapor-liquid separation tank 51 to the inside of the low-pressure tank 48a.

Meanwhile, the refrigerant introduced into the vapor-liquid separation tank 51 through the inflow pipe 52 is scattered by colliding with the vapor-liquid separation plate 54, and so, the liquid refrigerant contained in the refrigerant drops down along the inner wall surface of the vapor-liquid separation tank 51 and is gathered on the bottom of the vapor-liquid separation tank 51. In this instance, the liquid refrigerant gathered on the bottom of the vapor-liquid separation tank 51 contains also lubricating oil. While oil is generally soluble in and mixed with refrigerant, it is gathered on a position lower than that of the liquid refrigerant when the temperature is low since specific gravity of the liquid refrigerant is higher than oil.

Therefore, the inside of the vapor-liquid separation tank 51 is divided into an oil layer, a liquid refrigerant layer and a vapor refrigerant layer from the bottom thereof. In this instance, it is preferable that the outflow pipe 53 is in a "U"-shaped form as shown in the drawing and an inlet of the outflow pipe 53 is located in an area of the vapor refrigerant layer. It is also preferable that a bent lower end portion of the outflow pipe 53 is located in an area of the oil layer. Furthermore, it is preferable that an outlet of the outflow pipe 53 is formed at the top of the vapor-liquid separation tank 51, namely, opposed to the second low-pressure flow passage 46a.

Moreover, in order to return the oil gathered on the bottom of the vapor-liquid separation tank 51 to the compressor 10, the outflow pipe 53 includes an oil hole 53a formed on the lower end portion of the outflow pipe 53, which is located in the area of the oil gathered on the bottom of the vapor-liquid separation tank 51, and a filter 53b mounted around the oil hole 53a for preventing an inflow of foreign matters. So, the oil gathered on the bottom of the vapor-liquid separation tank 51 is introduced into the outflow pipe 53 through the oil hole 53a, discharged to the inside of the low-pressure tank 48a together with the vapor refrigerant flowing in the outflow pipe 53, and then, supplied to the compressor 10 through the second low-pressure flow passage 46a.

As described above, in the second preferred embodiment, since the accumulator 50 is mounted in the low-pressure tank 48a integrally formed on the side of the expansion block 41a and the high-pressure pipe 47 is wound on the accumulator 50, the high-pressure pipe 47 and the low-pressure tank 48a (which provides the same role as the low-pressure pipe of the first preferred embodiment) provide the same role as the internal heat exchanger 49 of the double pipe structure according to the first preferred embodiment, whereby the high-pressure refrigerant flowing in the high-pressure pipe 47 heat-exchanges with the low-pressure refrigerant flowing in the compressor 10 in the accumulator 50 through the low-pressure tank 48a.

Accordingly, in the second preferred embodiment, since the expansion valve 40a, the internal heat exchanger 49 and the accumulator 50 are formed integrally with one another, a size and a length of the refrigerant line is reduced more and a loss of energy can be reduced.

Hereinafter, a refrigerant circulation process of the air-conditioning system according to the second preferred embodiment will be described as follows.

First, when the high-temperature and high-pressure liquid refrigerant discharged from the compressor 10 is introduced into the gas cooler 20, the gas cooler 20 heat-exchanges the introduced liquid refrigerant with the outside air.

Continuously, the refrigerant passing through the gas cooler 20 is introduced into the first high-pressure flow passage 42 of the expansion block 41 through the outlet line 20b of the gas cooler 20, and then, introduced into the second high-pressure flow passage 43 through the high-pressure pipe 47 of the internal heat exchanger 49.

The refrigerant introduced into the second high-pressure flow passage 43 is quickly expanded by the throttling action of the expansion valve 40a and changed into a wet saturated state of low-temperature and low-pressure, and then, introduced into the evaporator 30 through the inlet line 30a of the evaporator 30.

Thereafter, the evaporator 30 heat-exchanges the introduced refrigerant with air blown to the inside of the vehicle by a blower (not shown). In this instance, the refrigerant is evaporated in the evaporator 30 to thereby be converted into low-temperature and low-pressure refrigerant, and then, discharged to the outside.

The low-temperature and low-pressure refrigerant discharged from the evaporator 30 is introduced into the first low-pressure flow passage 45a of the expansion block 41a through the outlet line of the evaporator 30, and then, introduced into the vapor-liquid separation tank 51 of the accumulator 50 through the inflow pipe 52.

The refrigerant introduced into the vapor-liquid separation tank 51 is first collided with the vapor-liquid plate 54, and in this instance, the liquid refrigerant is gathered on the bottom of the vapor-liquid separation tank 51 while the vapor refrigerant and the liquid refrigerant are separated from each other, whereby only pure vapor refrigerant is discharged to the inside upper portion of the low-pressure tank 48a through the outflow pipe 53.

Thereafter, the refrigerant discharged to the inside upper portion of the low-pressure tank 48a flows to the lower portion of the low-pressure tank 48a, and is discharged to the second low-pressure flow passage 46a and introduced into the compressor 10 through the inlet line 10a of the compressor 10.

In the above process, the high-temperature and high-pressure refrigerant passing through the high-pressure pipe 47 of the internal heat exchanger 49 heat-exchanges with the low-temperature and low-pressure refrigerant flowing in the low-pressure tank 48a, whereby temperature of the refrigerant flowing from the gas cooler 20 to the expansion valve 40a (valve part of the expansion valve) lowers and the degree of superheat of the refrigerant introduced into the compressor 10 from the accumulator 50 rises.

Here, since the high-pressure pipe 47 is wound on the vapor-liquid separation tank 51 of the accumulator 50, the high-temperature and high-pressure refrigerant flowing in the high-pressure pipe 47 heat-exchanges not only with the low-temperature and low-pressure refrigerant flowing in the accumulator 50 but also with the low-temperature and low-pressure refrigerant flowing in the low-pressure tank 48a. Of course, the high-temperature and high-pressure refrigerant heat-exchanges with the low-temperature and low-pressure refrigerant flowing in the low-pressure tank 48a more than the low-temperature and low-pressure refrigerant flowing in the accumulator 50.

Meanwhile, as described above, while only the air-conditioning system, which uses CO₂ as refrigerant, is described in the present invention, the present invention is not restricted to the above and is applicable to various air-conditioning systems, which use different refrigerants including an HFC-based refrigerant.

As described above, since the expansion means and the internal heat exchanger are formed integrally with each other or the expansion means, the internal heat exchanger and the accumulator are formed integrally with one another, the air-conditioning system according to the present invention can reduce the cost and the loss of energy by reducing the assembly process thereof through minimization and simplification of the refrigerant line.

In addition, since the expansion valve is embedded in the expansion block and the internal heat exchanger is integrally mounted on the side of the expansion block, the present invention can optimize efficiency thereof by adjusting the amount of the refrigerant introduced into the evaporator according to temperature and pressure of the refrigerant passing through the gas cooler.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. An air-conditioning system for vehicles comprising a compressor (10), a gas cooler (20), expansion means (40) and an evaporator (30) as a refrigerant line for circulating refrigerant in order, the expansion means (40) comprising:
an expansion block (41 or 41a) having a first high-pressure flow passage (42) connected with an outlet line (20b) of the gas cooler (20) and a second high-pressure flow passage (43) connected with an inlet line (30a) of the evaporator (30), and including a first low-pressure flow passage (45) connected with an outlet line (30b) of the evaporator (30) and a second low-pressure flow passage (46) connected with an inlet line (10a) of the compressor (10);
an expansion valve (40a) mounted inside the expansion block (41 or 41a) and adapted to control the opening and closing degree of the second high-pressure flow passage (43) according to temperature or pressure of refrigerant flowing in the first high-pressure flow passage (42), and including :
a temperature-sensing part (40b) mounted on the first high-pressure flow passage (42) of the expansion block (41) and adapted to perform contraction and expansion by sensing temperature or pressure of the refrigerant flowing in the first high-pressure flow passage (42), and
a valve part (40c) adapted to control the opening and closing degree of the second high-pressure flow passage (43) to adjust an amount of the refrigerant supplied to the evaporator (30) according to the contraction or expansion of the temperature-sensing part (40b);
the air-conditioning system further comprising an internal heat exchanger (49) integrally mounted on a side of the expansion block (41 or 41a) and adapted to heat-exchange high-pressure refrigerant flowing from the first high-pressure flow passage (42) to the second high-pressure flow passage (43) with low-pressure refrigerant flowing from the evaporator (30) to the compressor (10), the internal heat exchanger (49) including:
a low-pressure pipe (48) of a predetermined length mounted on a side of the expansion block (41) and adapted to connect an outlet of the first low-pressure flow passage (45) and an inlet of the second low-pressure flow passage (46) with each other; and
a high-pressure pipe (47) of a predetermined length mounted on the side of the expansion block (41) in a double-pipe structure with the low-pressure pipe (48) and adapted to connect an outlet of the first high-pressure flow passage (42) and an inlet of the second high-pressure flow passage (43) with each other,
whereby the internal heat exchanger (49) heat-exchanges low-pressure refrigerant flowing in the low-pressure pipe (48) with high-pressure refrigerant flowing in the high-pressure pipe (47).

2. The air-conditioning system according to claim 1, wherein the high-pressure pipe (47) is mounted in the low-pressure pipe (48) and has an end portion inserted into the first low-pressure flow passage (45) and connected with the outlet of the first high-pressure flow passage (42) and the other end portion inserted into the second low-pressure flow passage (46) and connected with the inlet of the second high-pressure flow passage (43).

3. The air-conditioning system according to claim 1, wherein the expansion block (41) has an insertion hole (44) formed between the first and second high-pressure flow passages (42; 43) for inserting the expansion valve (40a) thereto.

4. The air-conditioning system according to claim 3, wherein a sealing cap (40d) is mounted on the insertion hole (44) adapted to seal the insertion hole (44) after the expansion valve (40a) is inserted and mounted into the insertion hole (44).

5. The air-conditioning system according to claim 1, wherein the second high-pressure flow passage (43) and the first low-pressure flow passage (45) are formed adjacent to the side of the expansion block (41).

6. The air-conditioning system according to claim 1, **characterized in that** the air-conditioning system further comprises an accumulator (50) mounted between an outlet of the evaporator (30) and the internal heat exchanger (49).

7. An air-conditioning system for vehicles comprising a compressor (10), a gas cooler (20), expansion means (40) and an evaporator (30) as a refrigerant line for circulating refrigerant in order, **characterized in that** the expansion means (40) comprises:
an expansion block (41 or 41a) having a first high-pressure flow passage (42) connected with an outlet line (20b) of the gas cooler (20) and a second high-pressure flow passage (43) connected with an inlet line (30a) of the evaporator (30); and
an expansion valve (40a) mounted inside the expansion block (41 or 41a) and adapted to control the opening and closing degree of the second high-pressure flow passage (43) according to temperature or pressure of refrigerant flowing in the first high-pressure flow passage (42), and
the air-conditioning system comprising an internal heat exchanger (49) integrally mounted on a side of the expansion block (41 or 41a) and adapted to heat-exchange high-pressure refrigerant flowing from the first high-pressure flow passage (42) to the second high-pressure flow passage (43) with low-pressure refrigerant flowing from the evaporator (30) to the compressor (10),the internal heat exchanger (49) including
a low-pressure tank (48a) integrally formed on a side of the expansion block (41a) in such a way that a accumulator (50) connected with the outlet line (30b) of the evaporator (30) through a first low-pressure flow passage (45a) formed in the expansion block (41a) is mounted therein, the low-pressure tank (48a) having a second low-pressure flow passage (46a) formed on an outlet thereof in such a way that the refrigerant discharged from the accumulator (50) flows to the inlet line (10a) of the compressor (10); and
a high-pressure pipe (47) adapted to connect an outlet of the first high-pressure flow passage (42) with an inlet of the second high-pressure flow passage (43), the high-pressure pipe (47) being wound on the outer peripheral surface of the accumulator (50) within the low-pressure tank (48a),
whereby low-pressure refrigerant flowing in the low-pressure tank (48a) and high-pressure refrigerant flowing in the high-pressure pipe (47) heat-exchange with each other.

8. The air-conditioning system according to claim 7, wherein the accumulator (50) includes:
a vapor-liquid separation tank (51) having an empty inside;
an inflow pipe (52) adapted to communicate the first low-pressure flow passage (45a) formed in the expansion block (41a) with the inside upper portion of the vapor-liquid separation tank (51) to thereby introduce the low-pressure refrigerant discharged from the evaporator (30) into the vapor-liquid separation tank (51);
a vapor-liquid separation plate (54) integrally formed on the lower end of the inflow pipe (52) for separating the liquid refrigerant and the vapor refrigerant by scattering the low-pressure refrigerant introduced through the inflow pipe (52); and
an outflow pipe (53) adapted to communicate the inside upper portion of the vapor-liquid separation tank (51) with the inside of the low-pressure tank (48a) for discharging the vapor refrigerant of the vapor-liquid separation tank (51) to the inside of the low-pressure tank (48a).

9. The air-conditioning system according to claim 8, wherein an outlet of the outflow pipe (53) is opposed to the second low-pressure flow passage (46a).

10. The air-conditioning system according to claim 7, wherein the expansion block (41) has an insertion hole (44) formed between the first and second high-pressure flow passages (42; 43) for inserting the expansion valve (40a) thereto.

11. The air-conditioning system according to claim 10, wherein a sealing cap (40d) is mounted on the insertion hole (44) adapted to seal the insertion hole (44) after the expansion valve (40a) is inserted and mounted into the insertion hole (44).

12. The air-conditioning system according to claim 7, wherein the second high-pressure flow passage (43) and the first low-pressure flow passage (45) are formed adjacent to the side of the expansion block (41).

13. The air-conditioning system according to claim 7, wherein the expansion valve (40a) includes: a temperature-sensing part (40b) adapted to perform contraction and expansion by sensing temperature or pressure of the refrigerant; and a valve part (40c) adapted to control the opening and closing degree of the second high-pressure flow passage (43) to adjust an amount of the refrigerant supplied to the evaporator (30) according to the contraction or expansion of the temperature-sensing part (40b).

14. The air-conditioning system according to claim 7, wherein the temperature-sensing part (40b) is mounted on the first high-pressure flow passage (42) of the expansion block (41).

## Patentansprüche

1. Klimaanlage für Fahrzeuge, die einen Kompressor (10), einen Gaskühler (20), Expansionsmittel (40) und einen Verdampfer (30) als eine Kältemittelleitung zum Umwälzen von Kältemittel in dieser Reihenfolge umfasst, wobei die Expansionsmittel (40) umfassen:
einen Expansionsblock (41 oder 41a), der einen ersten Hochdruck-Strömungsdurchgang (42), der mit einer Auslassleitung (20b) des Gaskühlers (20) verbunden ist, und einen zweiten Hochdruck-Strömungsdurchgang (43), der mit einer Einlassleitung (30a) des Verdampfers (30) verbunden ist, aufweist, und der einen ersten Niederdruck-Strömungsdurchgang (45), der mit einer Auslassleitung (30b) des Verdampfers (30) verbunden ist, und einen zweiten Niederdruck-Strömungsdurchgang (46), der mit einer Einlassleitung (10a) des Kompressors (10) verbunden ist, aufweist;;
ein Expansionsventil (40a), das innerhalb des Expansionsblocks (41 oder 41a) befestigt ist und dazu eingerichtet ist, den Grad des Öffnens und Schließens des zweiten Hochdruck-Strömungsdurchgangs (43) entsprechend der Temperatur oder dem Druck des in dem ersten Hochdruck-Strömungsdurchgangs (42) fließenden Kältemittels zu steuern, und das aufweist:
einen Temperaturerfassungsteil (40b), der an dem ersten Hochdruck-Strömungsdurchgang (42) des Expansionsblocks (41) angebracht ist und dazu eingerichtet ist, eine Kontraktion und Expansion durch Erfassen von Temperatur oder Druck des in dem ersten Hochdruck-Strömungsdurchgang (42) fließenden Kältemittels durchzuführen, und
einen Ventilteil (40c), der dazu eingerichtet ist, den Grad des Öffnens und Schließens des zweiten Hochdruck-Strömungsdurchgangs (43) zu steuern, um eine Menge des Kältemittels, die dem Verdampfer (30) zugeführt wird, entsprechend der Kontraktion oder Expansion des Temperaturerfassungsteils (40b) zu regeln;
wobei die Klimaanlage ferner einen inneren Wärmetauscher (49) umfasst, der integral an einer Seite des Expansionsblocks (41 oder 41a) befestigt ist und dazu eingerichtet ist, einen Wärmeaustausch zwischen Hochdruck-Kältemittel, das von dem ersten Hochdruck-Strömungsdurchgang (42) zu dem zweiten Hochdruck-Strömungsdurchgang (43) fließt, und Niederdruck-Kältemittel, das von dem Verdampfer (30) zu dem Kompressor (10) fließt, zu bewirken, wobei der innere Wärmetauscher (49) aufweist:
ein Niederdruckrohr (48) von einer vorbestimmten Länge, das an einer Seite des Expansionsblocks (41) befestigt ist und dazu eingerichtet ist, einen Auslass des ersten Niederdruck-Strömungsdurchgangs (45) und einen Einlass des zweiten Niederdruck-Strömungsdurchgangs (46) miteinander zu verbinden; und
ein Hochdruckrohr (47) von einer vorbestimmten Länge, das an der Seite des Expansionsblocks (41) in einer Doppelrohrstruktur mit dem Niederdruckrohr (48) befestigt ist und dazu eingerichtet ist, einen Auslass des ersten Hochdruck-Strömungsdurchgangs (42) und einen Einlass des zweiten Hochdruck-Strömungsdurchgangs (43) miteinander zu verbinden,
wodurch der innere Wärmetauscher (49) einen Wärmeaustausch zwischen Niederdruck-Kältemittel, das in dem Niederdruckrohr (48) fließt, und Hochdruck-Kältemittel, das in dem Hochdruckrohr (47) fließt, bewirkt.

2. Klimaanlage nach Anspruch 1, wobei das Hochdruckrohr (47) in dem Niederdruckrohr (48) befestigt ist und einen Endabschnitt aufweist, der in den ersten Niederdruck-Strömungsdurchgang (45) eingesetzt ist und mit dem Auslass des ersten Hochdruck-Strömungsdurchgangs (42) verbunden ist, und der andere Endabschnitt in den zweiten Niederdruck-Strömungsdurchgang (46) eingesetzt ist und mit dem Einlass des zweiten Hochdruck-Strömungsdurchgangs (43) verbunden ist.

3. Klimaanlage nach Anspruch 1, wobei der Expansionsblock (41) ein Einsteckloch (44), das zwischen dem ersten und dem zweiten Hochdruck-Strömungsdurchgang (42; 43) ausgebildet ist, zum Einsetzen des Expansionsventils (40a) in dasselbe aufweist.

4. Klimaanlage nach Anspruch 3, wobei eine Dichtkappe (40d) auf dem Einsteckloch (44) befestigt ist, die dazu eingerichtet ist, das Einsteckloch (44) abzudichten, nachdem das Expansionsventil (40a) in das Einsteckloch (44) eingesetzt und in ihm befestigt wurde.

5. Klimaanlage nach Anspruch 1, wobei der zweite Hochdruck-Strömungsdurchgang (43) und der erste Niederdruck-Strömungsdurchgang (45) der Seite des Expansionsblocks (41) benachbart ausgebildet sind.

6. Klimaanlage nach Anspruch 1, **dadurch gekennzeichnet, dass** die Klimaanlage ferner einen Akkumulator (50) umfasst, der zwischen einem Auslass des Verdampfers (30) und dem inneren Wärmetauscher (49) befestigt ist.

7. Klimaanlage für Fahrzeuge, die einen Kompressor (10), einen Gaskühler (20), Expansionsmittel (40) und einen Verdampfer (30) als eine Kältemittelleitung zum Umwälzen von Kältemittel in dieser Reihenfolge umfasst, **dadurch gekennzeichnet, dass** die Expansionsmittel (40) umfassen:
einen Expansionsblock (41 oder 41a), der einen ersten Hochdruck-Strömungsdurchgang (42), der mit einer Auslassleitung (20b) des Gaskühlers (20) verbunden ist, und einen zweiten Hochdruck-Strömungsdurchgang (43), der mit einer Einlassleitung (30a) des Verdampfers (30) verbunden ist, aufweist; und
ein Expansionsventil (40a), das innerhalb des Expansionsblocks (41 oder 41a) befestigt ist und dazu eingerichtet ist, den Grad des Öffnens und Schließens des zweiten Hochdruck-Strömungsdurchgangs (43) entsprechend der Temperatur oder dem Druck des in dem ersten Hochdruck-Strömungsdurchgangs (42) fließenden Kältemittels zu steuern, und
wobei die Klimaanlage einen inneren Wärmetauscher (49) umfasst, der integral an einer Seite des Expansionsblocks (41 oder 41a) befestigt ist und dazu eingerichtet ist, einen Wärmeaustausch zwischen Hochdruck-Kältemittel, das von dem ersten Hochdruck-Strömungsdurchgang (42) zu dem zweiten Hochdruck-Strömungsdurchgang (43) fließt, und Niederdruck-Kältemittel, das von dem Verdampfer (30) zu dem Kompressor (10) fließt, zu bewirken, wobei der innere Wärmetauscher (49) aufweist:
einen Niederdrucktank (48a), der integral an einer Seite des Expansionsblocks (41a) auf eine solche Weise angeformt ist, dass ein Akkumulator (50), der mit der Auslassleitung (30b) des Verdampfers (30) über einen in dem Expansionsblock (41a) ausgebildeten ersten Niederdruck-Strömungsdurchgang (45a) verbunden ist, in ihm befestigt ist, wobei der Niederdrucktank (48a) einen zweiten Niederdruck-Strömungsdurchgang (46a) aufweist, der an einem Auslass desselben auf eine solche Weise ausgebildet ist, dass das aus dem Akkumulator (50) ausströmende Kältemittel zu der Einlassleitung (10a) des Kompressors (10) fließt; und
ein Hochdruckrohr (47), das dazu eingerichtet ist, einen Auslass des ersten Hochdruck-Strömungsdurchgangs (42) mit einem Einlass des zweiten Hochdruck-Strömungsdurchgangs (43) zu verbinden, wobei das Hochdruckrohr (47) innerhalb des Niederdrucktanks (48a) um die äußere Umfangsfläche des Akkumulators (50) herum gewunden ist,
wodurch ein Wärmeaustausch zwischen Niederdruck-Kältemittel, das in dem Niederdrucktank (48a) fließt, und Hochdruck-Kältemittel, das in dem Hochdruckrohr (47) fließt, bewirkt.

8. Klimaanlage nach Anspruch 7, wobei der Akkumulator (50) aufweist:
einen Dampf-Flüssigkeits-Trenntank (51) mit einem leeren Inneren;
ein Zuflussrohr (52), das dazu eingerichtet ist, den ersten Niederdruck-Strömungsdurchgang (45a), der in dem Expansionsblock (41a) ausgebildet ist, mit dem inneren oberen Abschnitt des Dampf-Flüssigkeits-Trenntanks (51) zu verbinden, um dadurch das aus dem Verdampfer (30) ausgeströmte Niederdruck-Kältemittel in den Dampf-Flüssigkeits-Trenntank (51) einzuleiten;
eine Dampf-Flüssigkeits-Trennplatte (54), die integral an das untere Ende des Zuflussrohres (52) angeformt ist, zum Trennen des flüssigen Kältemittels und des dampfförmigen Kältemittels durch Zerstäuben des durch das Zuflussrohr (52) zugeführten Niederdruck-Kältemittels; und
ein Abflussrohr (53), das dazu eingerichtet ist, den inneren oberen Abschnitt des Dampf-Flüssigkeits-Trenntanks (51) mit dem Inneren des Niederdrucktanks (48a) zu verbinden, um das dampfförmige Kältemittel des Dampf-Flüssigkeits-Trenntanks (51) ins Innere des Niederdrucktanks (48a) ausströmen zu lassen.

9. Klimaanlage nach Anspruch 8, wobei ein Auslass des Abflussrohres (53) auf der dem zweiten Niederdruck-Strömungsdurchgang (46a) entgegengesetzten Seite angeordnet ist.

10. Klimaanlage nach Anspruch 7, wobei der Expansionsblock (41) ein Einsteckloch (44), das zwischen dem ersten und dem zweiten Hochdruck-Strömungsdurchgang (42; 43) ausgebildet ist, zum Einsetzen des Expansionsventils (40a) in dasselbe aufweist.

11. Klimaanlage nach Anspruch 10, wobei eine Dichtkappe (40d) auf dem Einsteckloch (44) befestigt ist, die dazu eingerichtet ist, das Einsteckloch (44) abzudichten, nachdem das Expansionsventil (40a) in das Einsteckloch (44) eingesetzt und in ihm befestigt wurde.

12. Klimaanlage nach Anspruch 7, wobei der zweite Hochdruck-Strömungsdurchgang (43) und der erste Niederdruck-Strömungsdurchgang (45) der Seite des Expansionsblocks (41) benachbart ausgebildet sind.

13. Klimaanlage nach Anspruch 7, wobei das Expansionsventil (40a) aufweist:
einen Temperaturerfassungsteil (40b), der dazu eingerichtet ist, eine Kontraktion und Expansion durch Erfassen von Temperatur oder Druck des Kältemittels durchzuführen; und einen Ventilteil (40c), der dazu eingerichtet ist, den Grad des Öffnens und Schließens des zweiten Hochdruck-Strömungsdurchgangs (43) zu steuern, um eine Menge des Kältemittels, die dem Verdampfer (30) zugeführt wird, entsprechend der Kontraktion oder Expansion des Temperaturerfassungsteils (40b) zu regeln.

14. Klimaanlage nach Anspruch 7, wobei der Temperaturerfassungsteil (40b) an dem ersten Hochdruck-Strömungsdurchgang (42) des Expansionsblocks (41) befestigt ist.

## Revendications

1. Un système de climatisation pour véhicules comprenant un compresseur (10), un refroidisseur de gaz (20), des moyens de détente (40) et un évaporateur (30) comme ligne de fluide frigorigène pour la circulation de fluide frigorigène dans l'ordre, les moyens de détente (40) comprenant :
un bloc de détente (41 ou 41a) présentant un premier passage d'écoulement à haute pression (42) relié à une ligne de sortie (20b) du refroidisseur de gaz (20) et un deuxième passage d'écoulement à haute pression (43) relié à une conduite d'entrée (30a) de l'évaporateur (30), et comprenant un premier passage à basse pression (45) relié à une ligne de sortie (30b) de l'évaporateur (30) et un deuxième passage d'écoulement à basse pression (46) relié à une conduite d'entrée (10a) du compresseur (10) ;
une valve de détente (40a) montée à l'intérieur du bloc de détente (41 ou 41a) et conçue pour contrôler le degré d'ouverture et de fermeture du deuxième passage d'écoulement à haute pression (43) selon la température ou la pression du fluide frigorigène s'écoulant dans le premier passage d'écoulement à haute pression (42), et comprenant :
une partie de détection de la température (40b) montée sur le premier passage d'écoulement à haute pression (42) du bloc de détente (41) et adaptée pour réaliser la contraction et l'expansion par détection de la température ou la pression du fluide frigorigène s'écoulant dans le premier passage d'écoulement à haute pression (42), et
une partie de valve (40c) adaptée pour contrôler le degré d'ouverture et de fermeture du deuxième passage d'écoulement à haute pression (43) pour régler une quantité de fluide frigorigène fournie à l'évaporateur (30) en fonction de la contraction ou l'expansion de la partie de détection de la température (40b) ;
le système de climatisation comprenant en outre un échangeur de chaleur interne (49) monté de façon monobloc sur un côté du bloc de détente (41 ou 41a) et adapté à provoquer un échange de chaleur entre le fluide frigorigène à haute pression s'écoulant à partir du premier passage d'écoulement à haute pression (42) vers le deuxième passage d'écoulement à haute pression (43) avec du fluide frigorigène à basse pression s'écoulant à partir de l'évaporateur (30) vers le compresseur (10), l'échangeur de chaleur interne (49), comprenant :
une conduite à basse pression (48) d'une longueur prédéterminée montée sur un côté du bloc de détente (41) et destinée à relier une sortie du premier passage d'écoulement à basse pression (45) et une entrée du deuxième passage d'écoulement à basse pression (46) l'une à l'autre, et
une conduite à haute pression (47) d'une longueur prédéterminée montée sur le côté du bloc de détente (41) dans une structure à deux conduites avec la conduite à basse pression (48) et destinée à relier une sortie du premier passage d'écoulement à haute pression (42) et une entrée du deuxième passage d'écoulement à haute pression (43) l'une avec l'autre,
de sorte que l'échangeur de chaleur interne (49) provoques un échange de chaleur entre le fluide frigorigène à basse pression s'écoulant dans la conduite à basse pression (48) et le fluide frigorigène à haute pression s'écoulant dans la conduite à haute pression (47).

2. Le système de climatisation selon la revendication 1, dans lequel la conduite à haute pression (47) est montée dans la conduite à basse pression (48) et présente une partie d'extrémité insérée dans le premier passage d'écoulement à basse pression (45) et reliée à la sortie du premier passage d'écoulement à haute pression (42) et l'autre partie d'extrémité insérée dans le deuxième passage d'écoulement à basse pression (46) et reliée à l'entrée du deuxième passage d'écoulement à haute pression (43).

3. Le système de climatisation selon la revendication 1, dans lequel le bloc de détente (41) présente un orifice d'insertion (44) formé entre le premier et deuxième passage d'écoulement à haute pression (42 ; 43) pour l'insertion à cet endroit de la valve de détente (40a).

4. Le système de climatisation selon la revendication 3, dans lequel un bouchon d'étanchéité (40d) est monté sur l'orifice d'insertion (44) adapté pour sceller l'orifice d'insertion (44) après l'insertion et le montage de la valve de détente (40a) dans l'orifice d'insertion (44).

5. Le système de climatisation selon la revendication 1, dans lequel le deuxième passage d'écoulement à haute pression (43) et le premier passage d'écoulement à basse pression (45) sont formés adjacents au côté du bloc de détente (41).

6. Le système de climatisation selon la revendication 1, **caractérisé en ce que** le système de climatisation comprend en outre un accumulateur (50) monté entre une sortie de l'évaporateur (30) et l'échangeur de chaleur interne (49).

7. Un système de climatisation pour véhicules comprenant un compresseur (10), un refroidisseur de gaz (20), des moyens de détente (40) et un évaporateur (30) comme ligne de fluide frigorigène pour la circulation de fluide frigorigène dans l'ordre, **caractérisé en ce que** les moyens de détente (40) comprennent :
un bloc de détente (41 ou 41a) présentant un premier passage d'écoulement à haute pression (42) relié à une ligne de sortie (20b) du refroidisseur de gaz (20) et un deuxième passage d'écoulement à haute pression (43) relié à une conduite d'entrée (30a) de l'évaporateur (30), et
une valve de détente (40a) montée à l'intérieur du bloc de détente (41 ou 41a) et conçue pour contrôler le degré d'ouverture et de fermeture du deuxième passage d'écoulement à haute pression (43) selon la température ou la pression du fluide frigorigène s'écoulant dans le premier passage d'écoulement à haute pression (42), et
le système de climatisation comprenant un échangeur de chaleur interne (49) monté de façon monobloc sur un côté du bloc de détente (41 ou 41a) et adapté pour provoquer un échange de chaleur entre le fluide frigorigène à haute pression s'écoulant à partir du premier passage d'écoulement à haute pression (42) vers le deuxième passage d'écoulement à haute pression (43) et le fluide frigorigène à basse pression s'écoulant à partir de l'évaporateur (30) vers le compresseur (10), l'échangeur de chaleur interne (49) comprenant :
un réservoir à basse pression (48a) formé de façon monobloc sur un côté du bloc de détente (41a) de telle sorte qu'un accumulateur (50) relié à la ligne de sortie (30b) de l'évaporateur (30) par un premier passage d'écoulement à basse pression (45a) formé dans le bloc de détente (41 a) est monté à l'intérieur, le réservoir à basse pression (48a) présentant un deuxième passage d'écoulement à basse pression (46a) formé sur une sortie de celui-ci de telle sorte que le fluide frigorigène sortant de l'accumulateur (50) s'écoule vers la conduite d'entrée (10a) du compresseur (10), et
une conduite à haute pression (47) adaptée à relier une sortie du premier passage d'écoulement à haute pression (42) avec une entrée du deuxième passage d'écoulement à haute pression (43), la conduite à haute pression (47) étant enroulée sur la surface périphérique externe de l'accumulateur (50) dans le réservoir à basse pression (48a),
de sorte que le fluide frigorigène à basse pression s'écoulant dans le réservoir à basse pression (48a) et le fluide frigorigène à haute pression s'écoulant dans la conduite à haute pression (47) échangent de la chaleur l'un avec l'autre.

8. Le système de climatisation selon la revendication 7, dans lequel l'accumulateur (50) comprend :
un réservoir de séparation liquide-vapeur (51) vide à l'intérieur ;
une conduite d'alimentation (52) adaptée pour relier le premier passage d'écoulement à basse pression (45a) formé dans le bloc de détente (41a) avec la partie intérieure supérieure du réservoir de séparation liquide-vapeur (51) pour ainsi introduire le fluide frigorigène à basse pression sortant de l'évaporateur (30) dans le réservoir de séparation liquide-vapeur (51) ;
une plaque de séparation liquide-vapeur (54) formée de façon monobloc sur l'extrémité inférieure de la conduite d'alimentation (52) pour séparer le fluide frigorigène liquide et le fluide frigorigène sous forme de vapeur par diffusion du fluide frigorigène à basse pression introduit par la conduite d'alimentation (52), et
une conduite de sortie (53) adaptée pour relier la partie supérieure de l'intérieur du réservoir de séparation liquide-vapeur (51) avec l'intérieur du réservoir à basse pression (48a) pour évacuer le fluide frigorigène sous forme de vapeur du réservoir de séparation liquide-vapeur (51) à l'intérieur du réservoir à basse pression (48a).

9. Le système de climatisation selon la revendication 8, dans lequel une sortie du tuyau de sortie (53) est opposée au deuxième passage d'écoulement à basse pression (46a).

10. Le système de climatisation selon la revendication 7, dans lequel le bloc de détente (41) présente un orifice d'insertion (44) formé entre le premier et le deuxième passage d'écoulement à haute pression (42; 43) pour l'insertion à cet endroit de la valve de détente (40a).

11. Le système de climatisation selon la revendication 10, dans lequel un bouchon d'étanchéité (40d) est monté sur l'orifice d'insertion (44) adapté pour sceller l'orifice d'insertion (44) après l'insertion et le montage de la valve de détente (40a) dans l'orifice d'insertion (44).

12. Le système de climatisation selon la revendication 7, dans lequel le deuxième passage d'écoulement à haute pression (43) et le premier passage d'écoulement à basse pression (45) sont formés adjacents au côté du bloc de détente (41).

13. Le système de climatisation selon la revendication 7, dans lequel la valve de détente (40a) comprend: une partie de détection de la température (40b) adaptée pour réaliser la contraction et l'expansion par détection de la température ou la pression du fluide frigorigène, et une partie de valve (40c) adaptée pour contrôler le degré d'ouverture et de fermeture du deuxième passage d'écoulement à haute pression (43) pour régler une quantité de fluide frigorigène fournie à l'évaporateur (30) en fonction de la contraction ou expansion de la partie de détection de la température (40b).

14. Le système de climatisation selon la revendication 7, dans lequel la partie de détection de la température (40b) est montée sur le premier passage d'écoulement à haute pression (42) du bloc de détente (41).
